# EUROPEAN PATENT APPLICATION

(11) **EP 4 589 676 A1**
(43) Date of publication of application: **23.07.2025**
(21) Application number: 23883173.9
(22) Date of filing: 27.10.2023
(51) Int. Cl.: H01M 4/131, H01M 4/36, H01M 4/525, H01M 4/505, H01M 4/62, H01M 10/0525, H01M 50/105

(54) **LITHIUM SECONDARY BATTERY**

(30) Priority: 27.10.2022 KR 20220140776; 24.10.2023 KR 20230143340
(71) Applicant: LG Energy Solution, Ltd., Seoul 07335 (KR)
(72) Inventor: HEO, Min Ji, Daejeon 34122 (KR); KO, Myung Soo, Daejeon 34122 (KR); CHOI, Eun Seok, Daejeon 34122 (KR); PARK, Sung Bin, Daejeon 34122 (KR)
(74) Representative: Hoffmann Eitle
(86) International application number: PCT/KR2023/016897
(87) International publication number: WO 2024/091069

(57) **Abstract**

The lithium secondary battery according to the present invention includes a battery case, and an electrode assembly and an electrolyte accommodated in the battery case, the electrode assembly includes a positive electrode, the positive electrode includes a first positive electrode active material, a second positive electrode active material, and a conductive agent, the second positive electrode active material is a single particle composed of one primary particle, a quasi-single particle which is an aggregate of 2 to 30 primary particles, or a combination thereof, the weight ratio of the first positive electrode active material and the second positive electrode active material is **7.5:2.5** to 9.5:0.5, and the conductive agent includes a point-type conductive agent and a linear conductive agent at a weight ratio of 10:1 to 50:1.

## Description

### TECHNICAL FIELD

### Cross-reference to Related Applications

This application claims the benefit of Korean Patent Application Nos. 10-2022-0140776, filed on October 27, 2022, and 10-2023-0143340, filed on October 24, 2023, the disclosures of which are incorporated by reference herein.

### Technical Field

The present invention relates to a lithium secondary battery.

### BACKGROUND ART

Demand for batteries as an energy source has been significantly increased as technology development and demand with respect to power tools, electric vehicles, and energy storage systems (ESSs) have recently increased, and thus a variety of researches on batteries capable of meeting various needs have been carried out. As needs of the market for the lithium secondary batteries, having high capacity, as a power source of such a device have been increased, researches for increasing cell energy density have been actively carried out. In addition, as batteries which can be applied to devices, requiring a high output, such as power tools, the demand for batteries having excellent capacity characteristics as well as excellent rate characteristics has been increasing.

However, when the secondary battery embedded in the power tool is discharged with a high output, the system operation of the power tool is terminated due to the voltage drop of the secondary battery. That is, since the potential value of the secondary battery is greatly reduced during the high-rate discharge, the system determines that the battery capacity is insufficient even though the battery capacity remains, thereby causing the power of the power tool to be turned off.

In addition, a cylindrical-type battery is generally used as a battery for a power tool. In the case of a cylindrical-type battery, since the battery can is heavy in weight, the total weight of the power tool is increased when the cylindrical-type battery is used, and thus there is a limitation in that work convenience is reduced.

### DISCLOSURE OF THE INVENTION

### TECHNICAL PROBLEM

An aspect of the present invention provides a lithium secondary battery capable of preventing a power-off phenomenon of a power tool due to a low degree of voltage drop of the battery during the high-rate discharge.

Another aspect of the present invention provides a pouch-type lithium secondary battery having a low degree of voltage drop during the high-rate discharge, having a relatively light weight to have excellent work convenience, and having low resistance and excellent output characteristics.

### TECHNICAL SOLUTION

According to an aspect of the present invention, there is provided a lithium secondary battery including a battery case, and an electrode assembly and an electrolyte accommodated in the battery case, wherein the electrode assembly includes a positive electrode, the positive electrode includes a first positive electrode active material, a second positive electrode active material, and a conductive agent, the second positive electrode active material is a single particle composed of one primary particle, a quasi-single particle which is an aggregate of 2 to 30 primary particles, or a combination thereof, the weight ratio of the first positive electrode active material and the second positive electrode active material is 7.5:2.5 to 9.5:0.5, and the conductive agent includes a point-type conductive agent and a linear conductive agent at a weight ratio of 10:1 to 50:1.

According to the present invention, the first positive electrode active material may include a compound represented by Formula 1 below:

[Formula 1] Li₁₊ₓ[NiₐCo_{b}M1_{c}M2_{d}]₁₋ₓO_{2-y}X1_{y}

In Formula 1 above, 0.8≤a≤0.95, 0≤b≤0.2, 0≤c≤0.2, 0≤d≤0.1, a+b+c+d=1, 0≤x≤0.3, 0≤y≤0.2, M1 is Mn, Al, or a combination thereof, M2 is at least one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and X1 is at least one element selected from the group consisting of F, Cl, Br, I, At, P, and S.

According to the present invention, the second positive electrode active material may include a compound represented by Formula 2 below:

[Formula 2] Li_{1+z}[Ni_{g}CoₕM3ᵢM4ⱼ]_{1-z}O_{2-w}X2_{w}

In Formula 2 above, 0.85≤g≤0.95, 0≤h≤0.15, 0≤i≤0.15, 0≤j≤0.1, g+h+i+j=1, 0≤z≤0.3, 0≤w≤0.2, M3 is Mn, Al, or a combination thereof, M4 is at least one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and X2 is at least one element selected from the group consisting of F, Cl, Br, I, At, P, and S.

According to the present invention, the first positive electrode active material may include a lithium nickel-based oxide containing at least 80 mol%, specifically 80-85 mol% of nickel, with respect to the total number of moles of transition metals excluding lithium.

According to the present invention, the second positive electrode active material may include a lithium nickel-based oxide containing at least 85 mol% of nickel with respect to the total number of moles of transition metals excluding lithium.

According to the present invention, the first positive electrode active material may be a secondary particle in which at least 50 primary particles are aggregated with each other.

According to the present invention, the second positive electrode active material may have an average particle diameter D₅₀ smaller than the first positive electrode active material.

According to the present invention, the first positive electrode active material may have an average particle diameter D₅₀ of 8µm to 12um.

According to the present invention, the second positive electrode active material may have an average particle diameter D₅₀ of 1µm to 7um.

According to the present invention, the point-type conductive agent may be carbon black, and the linear conductive agent may be multi-walled carbon nanotubes.

According to the present invention, a battery resistance (DC-IR) at SOC 100 may be 7 mΩ or less, specifically, 1 mΩ to 7 mΩ.

According to the present invention, the battery case may be a pouch-type battery case.

### ADVANTAGEOUS EFFECTS

The lithium secondary battery according to the present invention is characterized in that a bimodal positive electrode active material including a large particle diameter secondary particle (the first positive electrode active material), a small particle diameter single particle and/or a quasi-single particle (a second positive electrode active material) at a weight ratio of 7.5:2.5 to 9.5:0.5 is used, and a positive electrode conductive agent including a point-type conductive agent and a linear conductive agent at a weight ratio of 10:1 to 50:1 is also used. As a result, even when the lithium secondary battery of the present invention is discharged at a high rate, the degree of voltage drop of the battery is not large. Thus, when the battery according to the present invention is used as a power source for a power tool, the power-off phenomenon of the power tool due to the high-rate discharge may be prevented.

In addition, when the lithium secondary battery according to the present invention is a pouch-type lithium secondary battery, the lithium secondary battery has a relatively light weight and thus has excellent work convenience.

In addition, when the lithium secondary battery according to the present invention is a pouch-type lithium secondary battery, there are a plurality of electrode tabs. Accordingly, the lithium secondary battery has low resistance and excellent output characteristics compared to a cylindrical-type battery, and thus is suitable for use as a power source of the power tool.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. Also, unless defined clearly and apparently in the description, the terms as defined in a commonly used dictionary are not ideally or excessively construed as having formal meaning.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In the present specification, when a part is referred to "include" an element, the part does not exclude other elements but may further include other elements unless otherwise indicated.

In the present specification, "A and/or B" means A, or B, or A and B.

In the present specification, the expression "%" denotes wt% unless explicitly stated otherwise.

The expression "D₅₀" in the present specification means a particle diameter at a cumulative volume of 50% in a particle diameter distribution curve of particles. The D₅₀, for example, may be measured by using a laser diffraction method. The laser diffraction method is capable of measuring a particle diameter from a submicron range to a range of several millimeters, thereby obtaining results of high reproducibility and high resolution.

In the present specification, the expression "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mini II from Bell Japan Inc.

In the present specification, "battery resistance (DC-IR) at SOC 100" may be calculated by charging a lithium secondary battery to SOC 100%, then measuring each of a voltage change and a current change of the battery according to the application of a pulse of 0.1 seconds and 10A through a PNE Cycle program (CTSMonPro, PNE SOLUTION CO., LTD), and dividing the voltage change value by the current change value.

Hereinafter, the present invention will be described in more detail.

### Lithium Secondary Battery

The lithium secondary battery according to the present invention includes a battery case, and an electrode assembly and an electrolyte accommodated in the battery case, the electrode assembly includes a positive electrode, the positive electrode includes a first positive electrode active material, a second positive electrode active material, and a conductive agent, the second positive electrode active material is a single particle composed of one primary particle, a quasi-single particle which is an aggregate of 2 to 30 primary particles, or a combination thereof, the weight ratio of the first positive electrode active material and the second positive electrode active material is 7.5:2.5 to 9.5:0.5, and the conductive agent includes a point-type conductive agent and a linear conductive agent at a weight ratio of 10:1 to 50:1.

In general, when the lithium secondary battery is discharged at a high rate, the voltage of the battery is significantly reduced. When the battery is used as a power source of a power tool, the power tool system determines the battery capacity is insufficient even though the battery capacity remains, the power of the power tool may be turned off.

As a result of a significant amount of repeated conducted researches for solving such a limitation, the present inventors have found that when a bimodal positive electrode active material including a large diameter secondary particle (the first positive electrode active material) and a small diameter single particle and/or quasi-single particle (the second positive electrode active material) at a weight ratio of 7.5:2.5 to 9.5:0.5 is used and the point-type conductive agent and the linear conductive agent are used together at a weight ratio of 10:1 to 50:1, the degree of voltage drop is not large even when the battery is discharged at a high rate, and thus when the battery is used as a power source of the power tool, the power-off phenomenon of the power tool may be prevented, thereby completing the present invention.

Hereinafter, each component of the lithium secondary battery according to the present invention will be described in more detail.

### <Electrode Assembly>

The electrode assembly according to the present invention may include a positive electrode, a negative electrode, and a separator disposed between the positive electrode and the negative electrode.

Hereinafter, each component of the electrode assembly will be described in more detail.

### (1) Positive Electrode

The positive electrode may include a positive electrode current collector, and a positive electrode active material layer disposed on the positive electrode current collector.

The positive electrode current collector is not particularly limited so long as it has conductivity without causing adverse chemical changes in the battery. For example, stainless steel, aluminum, nickel, titanium, sintered carbon, aluminum or stainless steel that is surface-treated with one of carbon, nickel, titanium, silver, or the like may be used as the current collector.

The positive electrode current collector may have a thickness of 10 µm to 500 µm, specifically 10 µm to 300 µm, and more specifically 10 µm to 50 µm. To improve output characteristics of the battery, when the loading amount of the positive electrode active material layer is reduced in order to reduce the resistance of the positive electrode, the positive electrode active material is embedded in the positive electrode current collector, and thus the positive electrode current collector may be disconnected. However, when the thickness of the positive electrode current collector according to the present invention satisfies the above numerical range, the thickness of the positive electrode current collector is thicker than that of the conventional positive electrode current collector, and thus the disconnection of the current collector may be prevented.

The positive electrode active material layer may include a first positive electrode active material and a second positive electrode active material, and may further include a conductive agent, a binder, and the like as necessary.

The first positive electrode active material and the second positive electrode active material are compounds capable of reversibly intercalating and deintercalating lithium, wherein the first positive electrode active material and the second positive electrode active material may include a lithium composite metal oxide including lithium and at least one metal such as cobalt, manganese, nickel, or aluminum. Specifically, the first positive electrode active material and the second positive electrode active material may each include a lithium nickel-based oxide so as to facilitate the implementation of a large-capacity battery.

The first positive electrode active material and the second positive electrode active material may have different compositions.

For example, the first positive electrode active material according to the present invention may include a compound represented by Formula 1 below:

[Formula 1] Li₁₊ₓ[NiₐCo_{b}M1_{c}M2_{d}]₁₋ₓO_{2-y}X1_{y}

In Formula 1 above, 0.8≤a≤0.95, 0≤b≤0.2, 0≤c≤0.2, 0≤d≤0.1, a+b+c+d=1, 0≤x≤0.3, and 0≤y≤0.2 may be met.

In Formula 1, M1 may be Mn, Al, or a combination thereof.

In Formula 1 above, M2 may be at least one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo.

In Formula 1 above, X1 may be at least one element selected from the group consisting of F, Cl, Br, I, At, P, and S.

The lithium nickel-based oxide included in the first positive electrode active material may contain at least 80 mol%, specifically 80 mol% to 95 mol%, and more specifically 80 mol% to 85 mol% of nickel with respect to the total number of moles of transition metals excluding lithium. When the content of nickel in the lithium nickel-based oxide included in the first positive electrode active material satisfies the above numerical range, the positive electrode energy density is increased to ensure sufficient battery capacity, and thus the battery of the present invention is suitable for use as a battery for a power tool requiring a large capacity.

Meanwhile, the second positive electrode active material according to the present invention may include a compound represented by Formula 2 below:

[Formula 2] Li_{1+z}[Ni_{g}CoₕM3ᵢM4ⱼ]_{1-z}O_{2-w}X2_{w}

In Formula 2 above, 0.85≤g≤0.95, 0≤h≤0.15, 0≤i≤0.15, 0≤j≤0.1, g+h+i+j=1, 0≤z≤0.3, and 0≤w≤0.2 may be met.

In Formula 2, M3 may be Mn, Al, or a combination thereof.

In Formula 2 above, M4 may be at least one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo.

In Formula 2 above, X2 may be at least one element selected from the group consisting of F, Cl, Br, I, At, P, and S.

The lithium nickel-based oxide included in the second positive electrode active material may contain at least 85 mol%, specifically 85 mol% to 95 mol%, and more specifically 85 mol% to 90 mol% of nickel with respect to the total number of moles of transition metals excluding lithium. When the content of nickel in the lithium nickel-based oxide included in the second positive electrode active material satisfies the above numerical range, the average nickel content in the positive electrode active material is increased compared to the case where only the first positive electrode active material is used, and thus the positive electrode energy density is further increased, thereby facilitating the implementation of a large-capacity battery.

Meanwhile, the first positive electrode active material and the second positive electrode active material according to the present invention have different average particle diameters D₅₀. Specifically, the second positive electrode active material has an average particle diameter D₅₀ smaller than the first positive electrode active material. As a result, the total specific surface area of the positive electrode active material is relatively increased compared to the case where only the first positive electrode active material is used, thereby the number of reaction sites of lithium ions may be increased, and thus the output characteristics of the battery may be improved.

The first positive electrode active material may be a secondary particle in which primary particles are aggregated with each other. For example, the secondary particle may be a particle in which at least 50, specifically 50 to 80, more specifically 50 to 70 primary particles are aggregated with each other.

The first positive electrode active material may have an average particle diameter D₅₀ of 8 µm to 12 µm, specifically, 8 µm to 10 µm, and more specifically 8 µm to 9 µm. When the average particle diameter D₅₀ of the first positive electrode active material satisfies the above numerical range, the charge capacity of the battery may be secured at an appropriate level.

The first positive electrode active material may have a BET specific surface area of 0.38 m²/g to 0.60 m²/g, specifically, 0.49 m²/g to 0.58 m²/g, and more specifically, 0.50 m²/g to 0.57 m²/g. When the BET specific surface area of the first positive electrode active material satisfies the above numerical range, there is an effect of maintaining an output level even when the battery is discharged at a high rate.

The first positive electrode active material may be formed by washing the lithium transition metal oxide with water, followed by drying and heat-treating. Through the process of washing with water, boron (B) coating, zirconium (Zr) doping, and/or strontium (Sr) doping may be possible on the surfaces of the particles, thereby improving the capacity and stability of the battery.

The second positive electrode active material is a single particle and/or a quasi-single particle. The single particle may be composed of one primary particle. The quasi-single particle may be a particle in which at least 2 to 30, specifically 2 to 20, and more specifically 2 to 10 primary particles are aggregated.

The second positive electrode active material has an average particle diameter D₅₀ smaller than the first positive electrode active material. More particularly, the second positive electrode active material may have an average particle diameter D₅₀ of 1µm to 7µm, specifically 2 µm to 6um, and more specifically 4µm to 5µm. When the average particle diameter D₅₀ of the second positive electrode active material satisfies the above numerical range, since the second positive electrode active material has a high specific surface area, the total specific surface area of the positive electrode active material may increase.

The second positive electrode active material may have a BET specific surface area of 0.54 m²/g to 0.74 m²/g, specifically, 0.59 m²/g to 0.69 m²/g, and more specifically, 0.61 m²/g to 0.67 m²/g. When the BET specific surface area of the second positive electrode active material satisfies the above numerical range, the total specific surface area of the positive electrode active material is increased so that the number of reaction sites of lithium ions may be increased, thereby improving the output characteristics of the battery.

The second positive electrode active material may be obtained without washing the lithium transition metal oxide with water. There is an effect of reducing the initial resistance by omitting the process of washing with water when producing the second positive electrode active material.

The positive electrode active material may be included in an amount of 60 wt% to 99 wt%, preferably 70 wt% to 99 wt%, and more preferably 80 wt% to 99 wt% with respect to the total weight of the positive electrode active material layer. When the content of the positive electrode material satisfies the above range, the battery capacity may be improved by securing a sufficient positive electrode energy density.

The weight ratio of the first positive electrode active material and the second positive electrode active material may be 7.5:2.5 to 9.5:0.5, specifically 7.5:2.5 to 8.5:1.5, and more specifically 7.8:2.2 to 8.2:1.8. If the weight ratio of the first positive electrode active material and the second positive electrode active material satisfies the above range, the voltage drop during the high rate discharge may be reduced.

In this case, when the first positive electrode active material is included in an amount of less than 75 wt% or the second positive electrode active material is included in an amount of more than 25 wt%, the capacity characteristics of the battery may be deteriorated. In addition, when the first positive electrode active material is included in an amount of greater than 95 wt% or the second positive electrode active material is included in an amount of less than 5 wt%, the total specific surface area of the positive electrode active material decreases, thereby deteriorating resistance and output characteristics.

The positive electrode conductive agent is a component for further improving conductivity of the positive electrode active material, and the conductive agent is not particularly limited as long as it has conductivity without causing adverse chemical changes in the battery.

For example, as the positive electrode conductive agent, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The positive electrode conductive agent according to the present invention includes both a point-type conductive agent and a linear conductive agent. Specifically, the conductive agent may include the point-type conductive agent and the linear conductive agent in a weight ratio of 10:1 to 50:1, preferably 10:1 to 40:1, and more preferably 20:1 to 40:1. When the weight ratio of the point-type conductive agent and the linear conductive agent is less than 10:1, the side reaction increases as the specific surface area of the conductive agent increases, and thus there is a limitation in that gas is excessively generated in the hot box test. When the weight ratio of the point-type conductive agent and the linear conductive agent is greater than 50:1, there is a limitation in that the conductive network in the positive electrode is not sufficiently secured, and thus the resistance value of the positive electrode is increased.

In this case, the content of the linear conductive agent may be 0.5 wt% or less, specifically 0.05 wt% to 0.3 wt%, and more specifically 0.05 wt% to 0.2 wt% with respect to the total weight of the positive electrode active material layer.

The positive electrode conductive agent may be included in an amount of 1 wt% to 20 wt%, preferably 1 wt% to 15 wt%, and more preferably 1 wt% to 10 wt% with respect to the total weight of the positive electrode active material layer. When the content of the positive electrode conductive agent in the positive electrode active material layer satisfies the above range, the electrical conductivity of the positive electrode may be improved by securing the positive electrode conductive network.

The positive electrode binder is a component that assists in the binding between the active material and the conductive agent and in the binding with the current collector.

Examples of the positive electrode binder may include polyvinylidene fluoride, polyvinyl alcohol, carboxymethylcellulose (CMC), starch, hydroxypropylcellulose, regenerated cellulose, polyvinylpyrrolidone, polyethylene (PE), polypropylene, ethylene-propylene-diene monomer, sulfonated ethylene-propylene-diene monomer, styrene-butadiene rubber, fluorine rubber, various copolymers, and the like, and any one alone thereof or a mixture of two or more thereof may be used.

The positive electrode binder may be included in an amount of 0.5 wt% to 5.0 wt%, specifically 1.0 wt% to 4.0 wt%, more specifically 1.0 wt% to 3.5 wt% with respect to the total weight of the positive electrode active material layer. When the content of the positive electrode binder satisfies the above range, a contact area between the positive electrode binder and the positive electrode active material is increased, thereby securing excellent positive electrode adhesion.

Meanwhile, the loading amount of the positive electrode active material layer may be less than 11.0 mg/cm², specifically 8.0 mg/cm² to 10.0 mg/cm², and more specifically 8.0 mg/cm² to 9.4 mg/cm². When the loading amount of the positive electrode active material layer is at least 11.0 mg/cm², there is a limitation in that the resistance of the battery increases as the resistance value of the positive electrode increases, resulting in the deterioration of output characteristics.

The porosity of the positive electrode active material layer may be greater than 30%, specifically, 32% to 38%, and more specifically, 32% to 37%. When the porosity of the positive electrode active material layer satisfies the above range, the interface resistance of the positive electrode is lowered, so that the output characteristics of the battery may be improved.

The filling density of the positive electrode active material layer may be at least 2.8 g/cc, specifically 2.8 g/cc to 3.5 g/cc, and more specifically 2.9 g/cc to 3.2 g/cc, and accordingly, the porosity of the positive electrode active material layer may have the above-described appropriate numerical range.

Meanwhile, the positive electrode may be prepared according to a typical method of preparing a positive electrode except that the above-described positive electrode active material is used. Specifically, the positive electrode may be prepared by preparing a positive electrode slurry composition including the above-mentioned positive electrode active material, the positive electrode conductive agent, and/or the positive electrode binder, applying the positive electrode slurry composition on a positive electrode current collector, and drying and rolling the positive electrode slurry composition.

Also, as another method, the positive electrode may be prepared by casting the positive electrode slurry composition on a separate support and then laminating a film separated from the support on the positive electrode collector.

### (2) Negative Electrode

The negative electrode may include a negative electrode current collector, and a negative electrode active material layer disposed on the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used.

The negative electrode current collector may typically have a thickness of 8 µm to 500 µm, and, similar to the positive electrode current collector, microscopic irregularities may be formed on the surface of the negative electrode current collector to improve the binding force of the negative electrode active material. The negative electrode current collector, for example, may be used in various shapes such as a film, a sheet, a foil, a net, a porous body, a foam body, and a non-woven fabric body.

The negative electrode active material layer may include a negative electrode active material, and may further include a conductive agent, a binder, and the like as necessary.

The negative electrode active material is a material capable of reversibly intercalating/deintercalating lithium metals and lithium ions.

The negative electrode active material may include at least one selected from the group consisting carbon-based active material, metal or an alloy of lithium and the metal, a metal composite oxide, a material which may be doped and undoped with lithium, and a transition metal oxide.

The carbon-based active material may be crystalline carbon, amorphous carbon, or a combination thereof. Examples of the crystalline carbon may include graphite such as irregular, planar, flaky, spherical, or fibrous natural graphite or artificial graphite, and examples of the amorphous carbon may include soft carbon (low-temperature sintered carbon) or hard carbon, mesophase pitch carbide, sintered cokes, or the like.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of lithium and the metal may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: Mn, Fe, Pb, Ge; Me': Al, B, P, Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, and lithium vanadium oxide.

Specifically, the negative electrode active material according to the present invention may be artificial graphite, and more specifically, may be artificial graphite surface-coated with hard carbon. When the artificial graphite is used as the negative electrode active material, the cycle life characteristics of the battery are improved by lowering the resistance of the negative electrode to improve the capacity characteristics of the battery, and by lowering the overvoltage during the charging so as to prevent lithium precipitation due to side reactions.

The negative electrode active material may be included in an amount of 60 wt% to 99 wt%, preferably 70 wt% to 99 wt%, and more preferably 80 wt% to 99 wt% with respect to the total weight of the negative electrode active material layer. When the content of the negative electrode active material satisfies the above range, the content of the negative electrode conductive agent and the negative electrode binder may be maintained at a desired level, and a sufficient negative electrode energy density may be secured, thereby improving the battery capacity.

The negative electrode conductive agent is a component for further improving the conductivity of the negative electrode active material, and the conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The negative electrode conductive agent may be included in an amount of 1 wt% to 20 wt%, preferably 1 wt% to 15 wt%, and more preferably 1 wt% to 10 wt% with respect to the total weight of the negative electrode active material layer. When the content of the negative electrode active material satisfies the above range, the electrical conductivity of the negative electrode may be improved by securing the negative electrode conductive network.

The negative electrode binder is a component that assists in the binding among the negative electrode conductive agent, the negative electrode active material, and the negative electrode current collector. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, polyethylene, polypropylene, ethylene-propylene-diene monomer, sulfonated ethylene-propylene-diene monomer, styrene-butadiene rubber, fluorine rubber, various copolymers thereof, and the like, and any one alone thereof or a mixture of two or more thereof may be used.

The negative electrode binder may be included in an amount of 1 wt% to 20 wt%, preferably 1 wt% to 15 wt%, and more preferably 1 wt% to 10 wt% with respect to the total weight of the negative electrode active material layer. When the content of the negative electrode binder satisfies the above range, the negative electrode active material particles may be smoothly bound to minimize the volume expansion problem of the negative electrode active material, and the negative electrode active material may be well attached to the negative electrode current collector.

### (3) Separator

The separator may be used without particular limitation as long as it is generally used as a separator in a lithium secondary battery, and particularly, it is preferable that the separator has high moisture-retention ability for an electrolyte solution as well as low resistance to the transfer of electrolyte ions.

As the separator, for example, a porous polymer film including a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. Also, a typical porous non-woven fabric, for example, a non-woven fabric formed of high melting point glass fibers or polyethylene terephthalate fibers may be used as the separator.

The separator may have a thickness of 5 µm to 20 µm, preferably 5 µm to 15 µm, and more preferably 6 µm to 13 µm. When the thickness of the separator satisfies the above range, it is possible to minimize the cell resistance value while preventing a short circuit between the positive electrode and the negative electrode. As a result, it is possible to improve the life characteristics and output characteristics of the lithium secondary battery.

### <Electrolyte>

Meanwhile, the lithium secondary battery according to the present invention may include an electrolyte.

The electrolyte may include an organic solvent and a lithium salt that are commonly used in the art, and is not particularly limited.

Any organic solvent may be used as the organic solvent without particular limitation so long as it may function as a medium through which ions involved in an electrochemical reaction of the battery may move. Specifically, as the organic solvent, an ester-based solvent such as methyl propionate, ethyl propionate, methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC) may be used alone or in combination.

Preferably, in the electrolyte, a mixed solution of a carbonate-based solvent and an ester-based solvent may be used as an organic solvent, and specifically, a mixed solution of a cyclic carbonate-based solvent and an ester-based solvent, or of a cyclic carbonate-based solvent, a linear carbonate-based solvent, and an ester-based solvent may be used.

The cyclic carbonate-based solvent may be at least one among ethylene carbonate and propylene carbonate. The linear carbonate-based solvent may be at least one selected from the group consisting of dimethyl carbonate, diethyl carbonate, and ethylmethyl carbonate.

The ester-based solvent may be ethyl propionate (EP). Since the ethyl propionate has a lower viscosity than a conventional electrolyte component, when it is included, an effect of increasing the ion conductivity of the electrolyte may be obtained.

The ethyl propionate may be included in an amount of 80 wt% or less, specifically 5 wt% to 80 wt%, and more specifically 40 wt% to 70 wt% with respect to the total weight of the electrolyte. When the content of the ethyl propionate satisfies the above numerical range, the viscosity of the electrolyte may be optimized to achieve excellent ion conductivity of the electrolyte.

The lithium salt may be used without particular limitation as long as it is a compound capable of providing lithium ions used in the lithium secondary battery. Specifically, LiN(SO₂F)₂, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. The lithium salt is preferably included in the electrolyte at a concentration of about 0.6 mol% to about 2 mol%.

The electrolyte according to the present invention may further include additives to further improve the physical properties of the secondary battery.

Examples of the additives may include at least one selected from the group consisting of a cyclic carbonate-based compound, a halogen-substituted carbonate-based compound, a nitrile-based compound, a sultone-based compound, a sulfate-based compound, a phosphate-based compound, a borate-based compound, a benzene-based compound, an amine-based compound, a silane-based compound, and a lithium salt-based compound.

The cyclic carbonate-based compound may be, for example, vinylene carbonate (VC) or vinylethylene carbonate (VEC).

The halogen-substituted carbonate-based compound may be, for example, fluoroethylene carbonate (FEC) or the like.

The nitrile-based compound may be, for example, succinonitrile, adiponitrile, hexantricyanide, 1,4-dicyano-2-butene, or the like.

The sultone-based compound may be, for example, 1,3-propane sultone, 1,3-propene sultone, or the like.

The sulfate-based compound may be, for example, ethylene sulfate (Esa), trimethylene sulfate (TMS), methyl trimethylene sulfate (MTMS), or the like.

The phosphate-based compound, for example, may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite.

The borate-based compound may be, for example, tetraphenylborate, lithium oxalyl difluoroborate (LiODFB), or the like.

The benzene-based compound, for example, may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte solution, wherein the lithium salt-based compound may include at least one compound selected from the group consisting of LiPO₂F₂, LiODFB, LiBOB (lithium bis(oxalato)borate (LiB(C₂O₄)₂), and LiBF₄.

Meanwhile, the additives may be used alone, or in admixture with two or more thereof.

The total amount of the additive may be 1 wt% to 20 wt%, specifically 1 wt% to 15 wt%, and more specifically 2 wt% to 10 wt% with respect to the total weight of the electrolyte solution. When the additive is included within the above range, a film may be stably formed on the electrode and ignition phenomenon may be suppressed when the battery is overcharged, and side reactions may be prevented from occurring during the initial activation process of the secondary battery, or the additive may be prevented from remaining or being precipitated.

### <Battery Case>

The lithium secondary battery according to the present invention may include a cylindrical-, prismatic-, pouch-, or coin-type battery case, and preferably may include a pouch-type battery case.

The pouch-type battery case includes a barrier layer, a base layer formed on one surface of the barrier layer, and a sealant layer formed on the other surface of the barrier layer, and includes at least one cup portion indented in one direction.

Specifically, the pouch-type battery case has flexibility, and may be manufactured by a method for forming a cup portion indented in one direction by inserting a pouch film stack in which a base layer, a barrier layer, and a sealant layer are sequentially stacked into a press forming apparatus, and stretching the pouch film stack by applying pressure to a partial region of the pouch film stack with a punch.

The base layer is disposed on the outermost layer of the pouch to protect and electrically insulate the electrode assembly from external impact.

The base layer may be made of a polymer material, for example, at least one polymer material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon.

The base layer may have a single-layered structure or a multi-layered structure in which different polymer films are stacked. When the base layer has a multi-layered structure, an adhesive layer may be interposed between the polymer films.

Meanwhile, the base layer may have a total thickness of 10 µm to 60 µm, preferably 20 µm to 50 µm, and more preferably 30 µm to 50 µm. When the base layer has a multi-layered structure, the thickness is a thickness including an adhesive layer. When the base layer satisfies the above range, the durability, insulation, and moldability are excellent. If the base layer is too thin, the durability may be deteriorated, damage to the base layer may occur during the forming process, if it is too thick, the moldability may be deteriorated, the overall thickness of the pouch may be increased, and the battery accommodation space may be reduced, thereby reducing energy density.

The barrier layer is for securing the mechanical strength of the pouch-type battery case, blocking the entry of gas, moisture, or the like outside the secondary battery, and preventing the leakage of the electrolyte.

The barrier layer may have a thickness of 40 µm to 100 µm, more preferably 50 µm to 80 µm, and more preferably 60 µm to 80 µm. When the thickness of the barrier layer satisfies the above range, the moldability is improved to increase the molding depth of the cup portion, or the crack and/or pinhole generation is less even when the two cups are molded, thereby improving resistance to external stress after molding.

Meanwhile, the barrier layer may be made of a metal material, and specifically, may be made of an aluminum alloy thin film.

The aluminum alloy thin film may include aluminum and a metal element, in addition to the aluminum, for example, one or two or more selected from the group consisting of iron (Fe), copper (Cu), chromium (Cr), manganese (Mn), nickel (Ni), magnesium (Mg), silicon (Si), and zinc (Zn).

The sealant layer is attached through thermal compression to seal the pouch, and is located on the innermost layer of the pouch film stack.

Since the sealant layer is a surface which is brought into contact with the electrolyte and the electrode assembly after the pouch is molded, the sealant layer should have insulation and corrosion resistance, and since the inside thereof should be completely sealed to block material movement between the inside and the outside, the sealant layer should have high sealing properties.

The sealant layer may be made of a polymer material, for example, at least one selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon, and among these, it is particularly preferable that the sealant layer includes polypropylene (PP) having excellent mechanical properties such as tensile strength, rigidity, surface hardness, abrasion resistance, and heat resistance, and excellent chemical properties such as corrosion resistance.

The sealant layer may have a single-layered structure, or may have a multi-layered structure including two or more layers made of different polymer materials.

The sealant layer may have a total thickness of 60 µm to 100 µm, preferably 60 µm to 90 µm, and more preferably 70 µm to 90 µm. If the sealant layer is too thin, sealing durability and insulation may be deteriorated, and if it is too thick, flexuosity may be deteriorated and the total thickness of the pouch film stack may increase, resulting in a decrease in energy density relative to volume.

Meanwhile, the pouch film stack above may be prepared through a method for preparing a pouch film stack known in the art. For example, the pouch film stack may be prepared through a method for attaching a base layer to the upper surface of a barrier layer through an adhesive and forming a sealant layer on the lower surface of the barrier layer through coextrusion or an adhesive, but is not limited thereto.

The pouch-type battery case may be sealed in a state in which the electrode assembly is accommodated such that a part of the electrode lead, that is, a terminal portion is exposed. Specifically, when the electrode lead is connected to an electrode tab of the electrode assembly and an insulating portion is formed on a portion of the electrode lead, the electrode assembly is accommodated in the accommodation space provided in the cup portion, the electrolyte is injected, and then the pouch-type battery case may be sealed.

The electrode lead may have a thickness of 0.05 mm to 0.5 mm, specifically 0.08 mm to 0.3 mm, and more specifically 0.1 mm to 0.2 mm. When the thickness of the electrode lead satisfies the above numerical range that is thicker than the existing one, there is an effect that the resistance of the battery is reduced while the heat generation is reduced when the external short circuit occurs, thereby improving heat resistance.

When the lithium secondary battery according to the present invention is a pouch-type lithium secondary battery, the lithium secondary battery is lighter than a cylindrical-type secondary battery, and the resistance becomes smaller because a plurality of tabs are present, thereby the lithium secondary battery has excellent output characteristics, and thus may be suitable for use as a battery for a power tool.

Meanwhile, the lithium secondary battery according to the present invention may have a battery resistance (DC-IR) at SOC 100 of 7 mΩ or less, specifically 1 mΩ to 7 mΩ, and more specifically 1 mΩ to 6.5 mΩ. When the battery resistance (DC-IR) satisfies the above numerical range, since the degree of voltage drop is not large even when the battery is discharged at a high rate, the battery of the present invention may be suitable for use as a power source of the power tool.

The lithium secondary battery according to the present invention may be used in a battery cell which is used as a power source for small devices such as a power tool, and may also be used as a unit cell in a medium and large sized battery module including a plurality of battery cells. Preferred examples of the medium and large sized devices include electric vehicles, hybrid electric vehicles, plug-in hybrid electric vehicles, Energy Storage Systems (ESSs), and the like.

Hereinafter, the present invention will be described in more detail with reference to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Examples and Comparative Examples

### Example 1 (Lithium Secondary Battery Preparation)

Artificial graphite (average particle diameter D₅₀ = 18.8um, BET specific surface area = 1.0 m²/g) coated with hard carbon, carbon black, carboxymethyl cellulose (CMC), and a styrene-butadiene rubber (SBR) were mixed at a weight ratio of 94.3:2.0:1.2:2.5, and distilled water was added thereto to prepare a negative electrode slurry. The solid content of the negative electrode slurry was 44 wt%.

The negative electrode slurry was applied to one surface of a copper (Cu) metal thin film having a thickness of 10 µm at a loading amount of 6.96 mAh/cm² and then dried in vacuum. Then, the dried negative electrode slurry was roll-pressed, dried in a vacuum oven at 130 °C for 12 hours, and then punched to prepare a negative electrode.

Li[Ni_{0.83}Co_{0.12}Mn_{0.05}]O₂, which is a secondary particle, having an average particle diameter D₅₀ of 10um and a BET specific surface area of 0.57 m²/g was used as a first positive electrode active material, and Li[Ni_{0.86}Co_{0.08}Mn_{0.06}]O₂, which is a single particle and/or a quasi-single particle, having an average particle diameter D₅₀ of 4µm and a BET specific surface area of 0.65 m²/g was used as a second positive electrode active material.

A positive electrode slurry was prepared by introducing a positive electrode active material obtained by mixing the first positive electrode active material and the second positive electrode active material at a weight ratio of 8:2, a positive electrode conductive agent obtained by mixing carbon black and multi-walled carbon nanotubes (MWCNTs) at a weight ratio of 30:1, polyvinylidene fluoride (PVdF), and a hydrogenated nitrile butadiene rubber (H-NBR) at a weight ratio of 95.28:3.1:1.3:0.32 into an N-methylpyrrolidone (NMP) solvent, followed by stirring. The solid content of the positive electrode slurry was 70 wt%.

The positive electrode slurry was applied to one surface of an aluminum thin film having a thickness of 15 µm at a loading amount of 9.24 mg/cm², and then dried in vacuum at 130 °C for 10 hours. The dried positive electrode slurry was roll-pressed, dried in a vacuum oven at 130 °C for 12 hours, and then punched to prepare a positive electrode.

The negative electrode and the positive electrode prepared as described above and a porous polyethylene separator having a thickness of 10 µm were assembled in a stacking manner to prepare an electrode assembly.

An electrolyte was prepared by dissolving LiPF₆ and LiFSi in a solvent mixed with ethylene carbonate (EC), ethyl propionate (EP), and ethylmethyl carbonate (EMC) at a weight ratio of 20:40:40 such that LiPF₆ became 0.7 M and LiFSi became 0.7 M.

A lithium secondary battery was prepared by accommodating the electrode assembly in a pouch-type battery case, injecting the electrolyte thereto, and sealing the case.

### Example 2 (Lithium Secondary Battery Preparation)

A positive electrode was prepared in the same manner as in Example 1, except that the positive electrode active material, a conductive agent obtained by mixing carbon black and multi-walled carbon nanotubes (MWCNTs) at a weight ratio of 15:1, polyvinylidene fluoride (PVdF), and a hydrogenated nitrile butadiene rubber (H-NBR) were mixed at a weight ratio of 95.16:3.2:1.3:0.34, and the loading amount of the positive electrode was 9.24 mg/cm².

A lithium secondary battery was prepared in the same manner as in Example 1, except that the above positive electrode was used.

### Comparative Example 1 (Lithium Secondary Battery Preparation)

A negative electrode was prepared in the same manner as in Example 1, except that the loading amount of the negative electrode was 6.52 mg/cm².

A positive electrode was prepared in the same manner as in Example 1, except that the first positive electrode active material, carbon black, polyvinylidene fluoride (PVdF), and hydrogenated nitrile butadiene rubber (H-NBR) was mixed and used at a weight ratio of 94.85:3.5:1.3:0.35, and the loading amount of the positive electrode was 9.64 mg/cm².

A lithium secondary battery was prepared in the same manner as in Example 1, except that the above negative electrode and the above positive electrode were used.

### Comparative Example 2 (Lithium Secondary Battery Preparation)

A negative electrode was prepared in the same manner as in Example 1, except that the loading amount of the negative electrode was 6.52 mg/cm².

A positive electrode was prepared in the same manner as in Example 1, except that the first positive electrode active material, a conductive agent obtained by mixing carbon black and multi-walled carbon nanotubes (MWCNTs) at a weight ratio of 6:1, polyvinylidene fluoride (PVdF), and a hydrogenated nitrile butadiene rubber (H-NBR) were mixed at a weight ratio of 94.8:3.5:1.3:0.4, and the loading amount of the positive electrode was 9.64 mg/cm².

A lithium secondary battery was prepared in the same manner as in Example 1, except that the above negative electrode and the above positive electrode were used.

### Comparative Example 3 (Lithium Secondary Battery Preparation)

A negative electrode was prepared in the same manner as in Example 1, except that the loading amount of the negative electrode was 6.56 mg/cm².

A positive electrode was prepared in the same manner as in Example 1, except that the first positive electrode active material, a conductive agent obtained by mixing carbon black and multi-walled carbon nanotubes (MWCNTs) at a weight ratio of 2:1, polyvinylidene fluoride (PVdF), and a hydrogenated nitrile butadiene rubber (H-NBR) were mixed at a weight ratio of 94.8:3.5:1.3:0.4, and the loading amount of the positive electrode was 9.64 mg/cm².

A lithium secondary battery was prepared in the same manner as in Example 1, except that the above negative electrode and the above positive electrode were used.

### Comparative Example 4 (Lithium Secondary Battery Preparation)

A negative electrode was prepared in the same manner as in Example 1, except that the loading amount of the negative electrode was 6.32 mg/cm².

A positive electrode was prepared in the same manner as in Example 1, except that the first positive electrode active material, a conductive agent obtained by mixing carbon black and multi-walled carbon nanotubes (MWCNTs) at a weight ratio of 30:1, polyvinylidene fluoride (PVdF), and a hydrogenated nitrile butadiene rubber (H-NBR) were mixed at a weight ratio of 95.28:3.1:1.3:0.32, and the loading amount of the positive electrode was 9.28 mg/cm².

A lithium secondary battery was prepared in the same manner as in Example 1, except that the above negative electrode and the above positive electrode were used.

### Comparative Example 5 (Lithium Secondary Battery Preparation)

A positive electrode was prepared in the same manner as in Example 1, except that a positive electrode active material, a conductive agent obtained by mixing carbon black and multi-walled carbon nanotubes (MWCNTs) at a weight ratio of 2:1, polyvinylidene fluoride (PVdF), and a hydrogenated nitrile butadiene rubber (H-NBR) were mixed at a weight ratio of 93.88:4.5:1.3:0.32, and the loading amount of the positive electrode was 9.23 mg/cm².

A lithium secondary battery was prepared in the same manner as in Example 1, except that the above positive electrode was used.

### Comparative Example 6 (Lithium Secondary Battery Preparation)

A positive electrode was prepared in the same manner as in Example 1, except that the positive electrode active material, carbon black, polyvinylidene fluoride (PVdF), and a hydrogenated nitrile butadiene rubber (H-NBR) were mixed and used at a weight ratio of 96.88:1.5:1.3:0.32, and the loading amount of the positive electrode was 9.23 mg/cm².

A lithium secondary battery was prepared in the same manner as in Example 1, except that the above positive electrode was used.

### Comparative Example 7 (Lithium Secondary Battery Preparation)

A positive electrode was prepared in the same manner as in Example 1, except that the first positive electrode active material and the second positive electrode active material were mixed at a weight ratio of 7:3.

A lithium secondary battery was prepared in the same manner as in Example 1, except that the above positive electrode was used.

### Experimental Example 1 - Evaluation of Internal Resistance of Lithium Secondary Battery

An internal resistance of the lithium secondary battery was evaluated by measuring a direct current internal resistance (DC-IR) value. Specifically, DC-IR was calculated by charging two lithium secondary batteries prepared in each of Examples and Comparative Examples to SOC 100% and SOC 50%, respectively, then measuring each of a voltage change and a current change of the batteries according to the application of a pulse of 0.1 seconds and 10A through a PNE Cycle program (CTSMonPro, PNE SOLUTION CO., LTD), and dividing the voltage change value by the current change value. The results thereof are presented in Table 1 below.

**[Table 1]**

| | Positive electrode active material | Positive electrode conductive agent | DC-IR (mΩ) | |
|---|---|---|---|---|
| | | | SOC 100% | SOC 50% |
| Example 1 | 80 wt% of first positive electrode active material | Carbon | 6.2 | 4.3 |
| | | black 3.0% | 6.2 | 4.3 |
| | 20 wt% of second positive electrode active material | MWCNT 0.1% | | |
| Example 2 | 80 wt% of first positive electrode active material | Carbon | 6.2 | 4.5 |
| | | black 3.0% | 6.3 | 4.5 |
| | 20 wt% of second positive electrode active material | MWCNT 0.2% | | |
| Comparative | 100 wt% of first positive | Carbon | 8.4 | 5.1 |
| Example 1 | electrode active material | black 3.5% | 8.4 | 5.2 |
| Comparative Example 2 | 100 wt% of first positive electrode active material | Carbon | 8 | 5.2 |
| | | black 3.0% | 7.8 | 5.1 |
| | | MWCNT 0.5% | | |
| Comparative Example 3 | 100 wt% of first positive electrode active material | Carbon | 10 | 4.5 |
| | | black 2.0% | 10 | 4.4 |
| | | MWCNT 1.0% | | |
| Comparative Example 4 | 100 wt% of first positive electrode active material | Carbon | 9.3 | 4.6 |
| | | black 3.0% | 9.3 | 4.5 |
| | | MWCNT 0.1% | | |
| Comparative Example 5 | 80 wt% of first positive electrode active material | Carbon | 10.2 | 4.6 |
| | | black 3.0% | 9.8 | 4.6 |
| | 20 wt% of second positive electrode active material | MWCNT 1.5% | | |
| Comparative Example 6 | 80 wt% of first positive electrode active material | Carbon | 11.2 | 4.9 |
| | | | 11.0 | 4.6 |
| | 20 wt% of second positive electrode active material | black 1.5% | | |
| Comparative Example 7 | 70 wt% of first positive electrode active material | Carbon | 8.9 | 4.5 |
| | | black 3.0% | 9.1 | 4.6 |
| | 30 wt% of second positive electrode active material | MWCNT 0.1% | | |

As shown in Table 1, it may be confirmed that the DC-IR values of Examples 1 to 2 measured at SOC 100% are 7 mΩ or less, which are significantly lower than those of Comparative Examples 1 to 7. This means that the degrees of voltage drop of the batteries in Examples 1 and 2 are smaller than those in Comparative Examples 1 to 7. That is, in the case of Examples 1 to 2 in which the weight ratio of the first positive electrode active material and the second positive electrode active material is 7.5:2.5 to 9.5:0.5, and the point-type conductive agent and the linear conductive agent are included at a weight ratio of 10:1 to 50:1, it may be confirmed that the degrees of voltage drop of the batteries during the high-rate discharge are smaller than those of Comparative Examples 1 to 7.

## Claims

1. A lithium secondary battery comprising:
a battery case; and
an electrode assembly and an electrolyte accommodated in the battery case,
wherein the electrode assembly comprises a positive electrode,
the positive electrode comprises a first positive electrode active material, a second positive electrode active material, and a conductive agent,
the second positive electrode active material is a single particle composed of one primary particle, a quasi-single particle which is an aggregate of 2 to 30 primary particles, or a combination thereof,
the weight ratio of the first positive electrode active material and the second positive electrode active material is 7.5:2.5 to 9.5:0.5, and
the conductive agent comprises a point-type conductive agent and a linear conductive agent at a weight ratio of 10:1 to 50:1.

2. The lithium secondary battery of claim 1, wherein the first positive electrode active material comprises a compound represented by Formula 1 below:
[Formula 1] Li₁₊ₓ[NiₐCo_{b}M1_{c}M2_{d}]₁₋ₓO_{2-y}X1_{y}
wherein, in Formula 1 above, 0.8≤a≤0.95, 0≤b≤0.2, 0≤c≤0.2, 0≤d≤0.1, a+b+c+d=1, 0≤x≤0.3, 0≤y≤0.2, M1 is Mn, Al, or a combination thereof, M2 is at least one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and X1 is at least one element selected from the group consisting of F, Cl, Br, I, At, P, and S.

3. The lithium secondary battery of claim 1, wherein the second positive electrode active material comprises a compound represented by Formula 2 below:
[Formula 2] Li_{1+z}[Ni_{g}CoₕM3ᵢM4₃]_{1-z}O_{2-w}X2_{w}
wherein, in Formula 2 above, 0.85≤g≤0.95, 0≤h≤0.15, 0≤i≤0.15, 0≤j≤0.1, g+h+i+j=1, 0≤z≤0.3, 0≤w≤0.2, M3 is Mn, Al, or a combination thereof, M4 is at least one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and X2 is at least one element selected from the group consisting of F, Cl, Br, I, At, P, and S.

4. The lithium secondary battery of claim 1, wherein the first positive electrode active material comprises a lithium nickel-based oxide containing at least 80 mol% of nickel with respect to the total number of moles of transition metals excluding lithium.

5. The lithium secondary battery of claim 1, wherein the first positive electrode active material comprises a lithium nickel-based oxide containing 80-85 mol% of nickel with respect to the total number of moles of transition metals excluding lithium.

6. The lithium secondary battery of claim 1, wherein the second positive electrode active material comprises a lithium nickel-based oxide containing at least 85 mol% of nickel with respect to the total number of moles of transition metals excluding lithium.

7. The lithium secondary battery of claim 1, wherein the first positive electrode active material is a secondary particle in which at least 50 primary particles are aggregated with each other.

8. The lithium secondary battery of claim 1, wherein the second positive electrode active material has an average particle diameter D₅₀ smaller than the first positive electrode active material.

9. The lithium secondary battery of claim 1, wherein the first positive electrode active material has an average particle diameter D₅₀ of 8 µm to 12 µm.

10. The lithium secondary battery of claim 1, wherein the second positive electrode active material has an average particle diameter D₅₀ of 1 µm to 7 µm.

11. The lithium secondary battery of claim 1, wherein the point-type conductive agent is carbon black, and the linear conductive agent is multi-walled carbon nanotubes.

12. The lithium secondary battery of claim 1, wherein a battery resistance (DC-IR) at SOC 100 is 7 mΩ or less.

13. The lithium secondary battery of claim 1, wherein the battery case is a pouch-type battery case.
